# EUROPÄISCHE PATENTSCHRIFT

(11) **EP 1 526 957 B1**
(45) Veröffentlichungstag und Bekanntmachung des Hinweises auf die Patenterteilung: **19.09.2007**
(21) Anmeldenummer: 03766187.3
(22) Anmeldetag: 16.07.2003
(51) Int. Cl.: B29C 39/06, B29C 39/36, B29C 33/34

(54) **VERFAHREN ZUR HERSTELLUNG VON HOHLEN FORMTEILEN**
METHOD FOR PRODUCING HOLLOW MOLDED PARTS
PROCEDE PERMETTANT DE FABRIQUER DES PIECES MOULEES CREUSES

(30) Priorität: 26.07.2002 DE 10234014
(43) Veröffentlichungstag der Anmeldung: 04.05.2005
(73) Patentinhaber: BASF Aktiengesellschaft, 67056 Ludwigshafen (DE)
(72) Erfinder: HÖNEMANN, Lutz-Peter, 49401 Damme (DE); OSTERMANN, Matthias, 49429 Visbek (DE); JACKISCH, Peter, 28844 Weyhe-Kirchweyhe (DE); THOMAS, Maria, 49439 Mühlen (DE)
(86) Internationale Anmeldenummer: PCT/EP2003/007701
(87) Internationale Veröffentlichungsnummer: WO 2004/012922

(56) Entgegenhaltungen:
- EP-A- 0 499 111
- DE-A- 2 119 071
- DE-A- 3 622 646
- FR-A- 1 198 283
- US-A- 3 712 787
- US-A- 5 028 330
- US-A- 5 695 791
- PATENT ABSTRACTS OF JAPAN vol. 012, no. 157 (M-696), 13. Mai 1988 (1988-05-13) -& JP 62 275718 A (NIPPON DENSO CO LTD), 30. November 1987 (1987-11-30) -& DATABASE WPI Week 198802 Derwent Publications Ltd., London, GB; AN 1988-011710 XP002259617 & JP 62 275718 A
- PATENT ABSTRACTS OF JAPAN vol. 2000, no. 17, 5. Juni 2001 (2001-06-05) -& JP 09 029780 A (FREUDENBERG NOK GENERAL PARTNERSHIP), 4. Februar 1997 (1997-02-04) -& DATABASE WPI Week 199715 Derwent Publications Ltd., London, GB; AN 1997-160358 XP002259618 & JP 09 029780 A
- PATENT ABSTRACTS OF JAPAN vol. 018, no. 037 (M-1545), 20. Januar 1994 (1994-01-20) & JP 05 269783 A (NIPPON ZEON CO LTD), 19. Oktober 1993 (1993-10-19)

## Beschreibung

Die Erfindung bezieht sich auf Verfahren zur Herstellung von hohlen, bevorzugt zylindrischen Formkörpern, bevorzugt mit einem Volumen von 5 cm³ bis 300 cm³, in einem Werkzeugträger umfassend die Schritte
(i) Einfüllen der Ausgangskomponenten zur Herstellung der Formkörper in eine Form (iv), die einen Kern (v) aufweist, der den Hohlraum des Formkörpers definiert,
(ii) Öffnen der Form (iv), wobei der Formkörper durch den Kern (v) festgehalten wird,
(iii) Entfernen des Formkörpers vom Kern (v),
wobei man den Formkörper außerhalb der Form (iv) vom Kern (v) entfernt, dadurch gekennzeichnet, dass man die Ausgangskomponenten zur Herstellung der Formkörper in eine mit Trennmittel versehene Form (iv) füllt, die einen am Boden oder am Dekkel befestigten Kern (v) aufweist, der den Hohlraum des Formkörpers definiert und der mit mindestens einem weiteren Kern (vi) verbunden ist, der sich außerhalb der Form (iv) befindet, die Form (iv) verschließt, nach dem Öffnen der Form (iv) den Kern (v) nach oben oder unten aus der durch die äußeren Wände definierten Form (iv) bewegt, durch eine Drehbewegung um 180° den Kern (v) gegen den Kern (vi), der keinen Formkörper festhält, austauscht, den Kern (vi) in die Form (iv) bewegt wobei der Kern (v) in eine Position gerät, aus der die Formkörper bei dem Entfernen des Kerns (vi) aus der Form (iv) von dem mit dem Kern (vi) verbundenen Kern (v) abgestreift werden.

Die Herstellung von Formteilen, beispielsweise geschäumten Polyurethanen in Werkzeugen, die in einer Taktstraße angeordnet sein können, ist allgemein bekannt. Üblicherweise werden die flüssigen Ausgangsstoffe zur Herstellung der Formteile oder die geschmolzenen Thermoplasten mittels eines Mischkopfes oder einer sonstigen Dosierapparatur in eine im allgemeinen temperierte Form gegossen oder gespritzt, die anschließend verschlossen in der Taktstraße weiterbewegt wird, so dass die nachfolgende Form gefüllt werden kann. Hohlräume in den Formteilen werden üblicherweise durch sogenannte Kerne erzeugt, im allgemeinen ebenfalls zylindrische, längliche und gegebenenfalls konturierte Ausstülpungen des Deckels oder häufiger des Bodens der Form. Eine Entformung erfolgt üblicherweise, indem der Deckel abgehoben wird, die zwei Teile der Form, die die Mantelfläche des Formteils definieren von Formteil weggeklappt oder weggeschoben werden und anschließend das Formteil von dem Kern, der üblicherweise die Bodenplatte darstellt oder Teil der Bodenplatte der Form ist, abgezogen wird. Aufgrund der teilweise sehr langen Reaktionszeiten, bis das Formteil soweit ausgehärtet ist, dass es entformt werden kann, bestehen insbesondere Taktstraßen zur Herstellung von Polyurethanformkörpern durch Umsetzung der reaktiven Ausgangskomponenten aus einer Vielzahl hintereinander umlaufend angeordneter Formen, um so die Dauer, bis das jeweilige Werkzeug wieder am Mischkopf zur Befüllung angelangt, auf die Reaktionszeit abzustimmen.

EP-A 499 111 offenbart Verfahren zur Herstellung von hohlen Formkörpern in einem Werkzeugträger. FR-A 1198283 beschreibt Verfahren zur Herstellung von Formkörpern.

Aufgabe der vorliegenden Erfindung war es, Verfahren zur Herstellung von hohlen, bevorzugt zylindrischen Formkörpern, bevorzugt mit einem Volumen von 5 cm³ bis 300 cm³, in einem Werkzeugträger umfassend die Schritte
(i) Einfüllen der Ausgangskomponenten zur Herstellung der Formkörper in eine bevorzugt mit Trennmitteln versehene Form (iv), die einen Kern (v) aufweist, der den Hohlraum des Formkörpers definiert,
(ii) Öffnen der Form (iv), wobei der Formkörper durch den Kern (v) festgehalten wird,
(iii) Entfernen des Formkörpers vom Kern (v),
zu entwickeln, die eine höhere Produktivität aufweisen. Insbesondere sollte der Ausstoß an Formteilen pro Werkzeug erhöht werden. Dieses Ziel ist von besonderer Bedeutung, da aufgrund ihrer aufwendigen Fertigung die Werkzeuge einen wesentlichen Kostenfaktor bei der Produktion der Formteile ausmachen.

Diese Aufgaben konnten durch ein Verfahren gelöst werden, bei dem man den Formkörper außerhalb der Form (iv) vom Kern (v) entfernt, bevorzugt abstreift, und wobei man die Ausgangskomponenten zur Herstellung der Formkörper in eine mit Trennmittel versehene Form (iv) füllt, die einen am Boden oder am Deckel befestigten Kern (v) aufweist, der den Hohlraum des Formkörpers definiert und der mit mindestens einem weiteren Kern (vi) verbunden ist, der sich außerhalb der Form (iv) befindet, die Form (iv) verschließt, nach dem Öffnen der Form (iv) den Kern (v) nach oben oder unten aus der durch die äußeren Wände definierten Form (iv) bewegt, durch eine Drehbewegung um 180° den Kern (v) gegen den Kern (vi), der keinen Formkörper festhält, austauscht, den Kern (vi) in die Form (iv) bewegt wobei der Kern (v) in eine Position gerät, aus der die Formkörper bei dem Entfernen des Kerns (vi) aus der Form (iv) von dem mit dem Kern (vi) verbundenen Kern (v) abgestreift werden. Unter dem Ausdruck "außerhalb der Form" ist der Raum zu verstehen, der bei geöffneter Form außerhalb, d.h. oberhalb, unterhalb oder auf der Rückseite der die Mantelfläche des zylindrischen Formkörpers definierenden Seitenteile der Form liegt.

Insbesondere bei hohlen zylindrischen Formteilen, deren Hohlraum durch einen Kern der Form ausgebildet wird, ist die mechanische Beanspruchung bei der Entformung sehr hoch, da die elastischen Formkörper gegebenenfalls über Ausstülpungen des Kern gezogen werden. Deshalb ist es gerade in diesen Fällen wichtig, dass die Formteile ausreichend ausgehärtet sind, um beim Ziehen des Formteils vom Kern eine Beschädigung zu vermeiden. Durch das erfindungsgemäße Verfahren wird die eigentliche Form (iv) frühzeitig geleert und kann damit erneut gefüllt werden, bevor der Formkörper vom Kern (v) entfernt wird. Die Entformung aus der eigentlichen Form (iv) kann deutlich früher als das Entfernen des Kerns (v) aus dem zylindrischen Formteil erfolgen, da die Beanspruchungen bei der Entfernung der äußeren Formteile deutlich geringer sind als beim Entfernen des Kerns (v). Wie eingangs dargestellt ist der Kern definiert durch den im Formkörper abzubildenden Hohlraum und entsprechend bevorzugt zylindrisch, länglich und gegebenenfalls konturiert ausgebildet. Der Kern befindet sich bevorzugt am Boden der Form, während die Befüllung der Form (iv) bevorzugt über den Deckel der Form erfolgt.

Der Kern (v), der zumindest teilweise den Hohlraum der Formkörper definiert ist erfindungsgemäß beweglich angeordnet und kann erfindungsgemäß aus der eigentlichen Form (iv), die insbesondere bei zylindrischen Formteilen mindestens eine, bevorzugt mindestens zwei, besonders bevorzugt 2 Teile, die zumindest die Kontur der Mantelfläche des Zylinders bilden sowie mindestens ein Boden und/oder Deckelteil, das dem Kern gegenüberliegend angeordnet ist, umfasst, entfernt werden. Dies stellt eine wesentliche Neuerung gegenüber dem Stand der Technik dar, der den Kern als Teil der Form beschreibt. Auch beim Öffnen der Form verbleibt der Kern mit dem Formkörper in der Form und die Entformung erfolgt ebenfalls in der Form. Lediglich der Deckel sowie die Seitenteile der Form werden üblicherweise geöffnet, d.h. beispielsweise gekippt oder aus der geschlossenen Position geklappt, um Zugang zum Formkörper zu erlangen und diesen vom Kern zu ziehen. Erfindungsgemäß sind die bevorzugt zwei Teile der Form, die die Mantelfläche des zylindrischen Formkörpers definieren sollen, sowie gegebenenfalls ein Deckel beweglich in dem Werkzeug montiert, womit ein Öffnen der Form und ein einfaches Entfernen des Kerns (v) mit dem Formteil erreicht wird. Bevorzugt wird der Kern (v) mit dem Formteil nach unten oder nach oben aus der Form (iv) entfernt. Bevorzugt werden bei der Entformung des Formteils mit dem Kern (v) aus der Form der Deckel der Form (iv) aufgeklappt oder aufgeschoben und gegebenenfalls anschließend geklappt und die Seitenteile der Form soweit von dem Formteil, das auf dem Kern (v) fixiert ist, entfernt, bevorzugt weggeschoben, dass der Kern mit dem Formteil bevorzugt nach unten aus der Form entfernt werden kann.

Die Oberfläche der Form (iv), d.h. die Oberfläche, die mit den Ausgangskomponenten zur Herstellung des Formkörpers in Kontakt kommt, wird mit allgemein bekannten Trennmitteln, beispielsweise auf Wachs- oder Silikonbasis oder insbesondere wässrigen Seifenlösungen versehen, bevorzugt eingesprüht, besonders bevorzugt automatisch eingesprüht. Die Auftragung des Trennmittels erfolgt nach dem Entfernen des Formkörpers mit dem Kern (v) aus der Form und vor dem Einfüllen der Ausgangkomponenten in die Form (iv). Beim Auftragen des Trennmittels kann der jeweilige nackte Kern, d.h. ohne Formkörper, sich in der Form befinden. Alternativ ist es möglich, den Kern außerhalb der Form mit Trennmittel zu versehen.

Erfindungsgemäß weist das Werkzeug zur Herstellung der Formteile mindestens zwei Kerne (v) und (vi) auf, die abwechselnd in der Form positioniert werden. Sobald somit das Formteil in der Form (iv) soweit ausgehärtet ist, dass es zusammen mit dem einen Kern (v) aus der Form genommen werden kann, wird der andere Kern (vi), von dem, bevorzugt parallel zur Entnahme des Kerns (v) zusammen mit dem Formteil aus der Form (iv), das im vorherigen Zyklus hergestellte Formteil entfernt wird, in der Form (iv) platziert, die dann im nächsten Schritt erneut mit den Ausgangskomponenten zur Herstellung eines weiteren Formteils gefüllt werden. Das heißt, erfindungsgemäß wird man parallel zur Entnahme des einen Kerns (v) mit dem neuen Formteil aus der Form (iv) das auf dem Kern (vi) befindliche Formteil abstreifen, dann die Kerne (v) und (vi) um 180° drehen und somit in ihrer Position austauschen und anschließend den Kern (vi) in die Form (iv) einführen. In der erfindungsgemäßen Ausführungsform weist das Werkzeug somit mindestens zwei Kerne (v) und (vi) auf, die zu unterschiedlichen Zeiten in der Form (iv) mit den Ausgangskomponenten zur Herstellung der Formkörper umgeben werden, d.h. bevorzugt alternierend in der Form (iv) zur Herstellung der Formkörper positioniert werden. Bevorzugt sind die Kerne (v) und (vi) derart miteinander verbunden, beispielsweise über einen gemeinsamen Drehteller oder Drehbalken, dass der Wechsel der Kerne durch ein Absenken der Apparatur, auf der die Kerne (v) und (vi) befestigt sind, aus der Form (iv), einer anschließenden Drehung um 180° sowie ein darauf folgendes Anheben der Kerne, wobei der Kern (vi) in der Form platziert wird, erfolgen kann. Die Kerne (v) und (vi) sind somit bevorzugt direkt miteinander verbunden. Dabei kann jedes Werkzeug auch mehr als eine Form (iv) und entsprechend auch mehr als einen Kern (v) und gegebenenfalls und bevorzugt mehr als einen Kern (vi) aufweisen. Beispielsweise können in dem Werkzeug nebeneinander zwei Formen angeordnet sein.

Bevorzugt weist das Werkzeug, in dieser Schrift auch als Werkzeugträger bezeichnet, somit mindestens zwei, bevorzugt zwei Kerne (v) und (vi) auf, die bevorzugt beide relativ zur Form beweglich angeordnet sind und abwechselnd in die Form (iv) eingebracht werden können. Besonders bevorzugt weist das Werkzeug 1 bis 4 Kerne (v), 1 bis 4 Kerne (vi) und 1 bis 4 Formen (iv) auf, wobei die Anzahl an (iv), (v) und (vi) besonders bevorzugt gleich ist.

Erfindungsgemäß erfolgt somit die Herstellung der Formkörper derart, dass man die Ausgangskomponenten zur Herstellung der Formkörper in eine mit Trennmitteln versehene Form (iv) füllt, die einen am Boden oder am Deckel, bevorzugt am Boden befestigten Kern (v) aufweist, der den Hohlraum des Formkörpers definiert und der mit mindestens einem weiteren Kern (vi) verbunden ist, der sich außerhalb der Form (iv) befindet, die Form (iv) verschließt, nach dem Öffnen der Form (iv) den Kern (v) bevorzugt nach oben oder unten, bevorzugt unten aus der durch die äußeren Wände definierten Form (iv) bewegt, durch eine Drehbewegung um 180° den Kern (v) gegen den Kern (vi), der keinen Formkörper festhält, austauscht, den Kern (vi) in die Form (iv) bewegt wobei der Kern (v) in eine Position geführt wird, aus der der Formkörper bei dem Entfernen des Kerns (vi) aus der Form (iv) von dem mit dem Kern (vi) verbundenen Kern (v) abgestreift werden. Das Abstreifen kann bevorzugt derart erfolgen, das beim Anheben der Kerne (v) und (vi), d.h. beim Anheben des Kerns (vi) in die Form (iv), der Kern (v) mit dem Formkörper über eine nur nach oben bewegliche Klappe oder Zange, die über eine Aussparung für den Kern verfügt, geführt wird, die zwar eine freie Bewegung des Kerns (v) nach oben oder unten zulässt, aber aufgrund der für den Formkörper zu kleinen Aussparung bei der nächsten Absenkung der Kerne (v) und (vi) den Formkörper vom Kern (v) abstreift. Dieses Abstreifen ist deutlich schonender für die Formkörper als ein Abziehen der Formkörper vom Kern, beispielsweise mit automatisierten Greifarmen. Durch dieses bevorzugte Abstreifen wird der Anteil an fehlerhaften Produkten wie gewünscht verringert.

Die nach dem erfindungsgemäßen Verfahren hergestellten Formkörper können aus allgemein bekannten Materialien bestehen, die aus flüssigen, erweichten oder pulverisierten Ausgangskomponenten in einer Form hergestellt werden können. Bevorzugt handelt es sich um elastische Formkörper. Besonders bevorzugt basieren die Formkörper auf thermoplastischen Kunststoffen, Gummi, und/oder Kunststoffen hergestellt aus reaktiven Ausgangskomponenten. Besonders bevorzugt sind Formkörper auf der Basis von zelligen Polyurethanelastomeren, die gegebenenfalls Harnstoffgruppen enthalten können. Besonders bevorzugt handelt es sich bei den Formkörpern um zelligen Polyurethanelastomeren mit einer Dichte nach DIN 53 420 von 200 bis 1100, bevorzugt 300 bis 800 kg/m³, einer Zugfestigkeit nach DIN 53 571 von ≥ 2, bevorzugt 2 bis 8 N/mm², einer Dehnung nach DIN 53 571 von ≥ 300, bevorzugt 300 bis 700 % und einer Weiterreißfestigkeit nach DIN 53 515 von ≥ 8, bevorzugt 8 bis 25 N/mm. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm.

Elastomere auf der Basis von Polyisocyanat-Polyadditionsprodukten und ihre Herstellung sind allgemein bekannt und vielfältig beschrieben, beispielsweise in EP-A 62 835, EP-A 36 994, EP-A 250 969, DE-A 195 48 770 und DE-A 195 48 771. Bevorzugt weisen die zelligen Polyisocyanat-Polyadditionsprodukte einen Druckverformungsrest kleiner 25 % nach DIN 53 572, wobei als Prüfkörper Würfel der Abmessung 40 mm x 40 mm x 30 mm ohne Silikonanstrich verwendet werden, die Prüfung bei konstanter Verformung erfolgt, wobei die Prüfkörper um 40 % zusammengedrückt und 22 Stunden bei 80 °C im Umluftschrank gehalten werden, die Prüfeinrichtung nach der Entnahme aus dem Wärmeschrank 2 Stunden im zusammengedrückten Zustand auf Raumtemperatur abgekühlt wird, anschließend der Prüfkörper aus der Prüfeinrichtung entnommen wird und 10 min ± 30 s nach der Entnahme der Prüfkörper aus der Prüfeinrichtung die Höhe der Prüfkörper auf 0,1 mm genau gemessen wird. Bei den Ausgangskomponenten zur Herstellung der Formkörper handelt es somit bevorzugt um eine Reaktionsmischung enthaltend (a) Isocyanate und (b) gegenüber Isocyanaten reaktive Verbindungen, mit der zellige Polyurethanelastomere als Formköper hergestellt werden. Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Die Oberflächentemperatur der Forminnenwand beträgt üblicherweise 40 bis 95°C, bevorzugt 50 bis 90°C. Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in die bevorzugt beheizte, bevorzugt dichtschließende Form (iv) gebracht werden. Die Formteile sind nach 1 bis 60 Minuten ausgehärtet und damit entformbar. Die Menge des in die Form (iv) eingebrachten Reaktionsgemisches wird üblicherweise so bemessen, dass die erhaltenen Formkörper die bereits dargestellte Dichte aufweisen. Die Ausgangskomponenten werden üblicherweise mit einer Temperatur von 15 bis 120°C, vorzugsweise von 30 bis 110°C, in das Formwerkzeug eingebracht. Die Verdichtungsgrade zur Herstellung der Formkörper liegen zwischen 1,1 und 8, vorzugsweise zwischen 2 und 6. Nach einer besonders vorteilhaften Ausführungsform wird in einem zwei-stufigen Prozess zunächst ein NCO-gruppenhaltiges Prepolymeres hergestellt. Dazu wird die Komponente (b) mit (a) im Überschuss üblicherweise bei Temperaturen von 80°C bis 160°C, vorzugsweise von 110°C bis 150°C, zur Reaktion gebracht. Die Reaktionszeit ist auf das Erreichen des theoretischen NCO-Gehaltes bemessen. Bevorzugt erfolgt demnach die erfindungsgemäße Herstellung der Formkörper in einem zweistufigen Verfahren, indem man in der ersten Stufe durch Umsetzung von (a) mit (b) ein Isocyanatgruppen aufweisendes Prepolymer herstellt und dieses Prepolymer in der zweiten Stufe in einer Form mit einer Vernetzerkomponente enthaltend gegebenenfalls die weiteren eingangs dargestellten Komponenten umsetzt. Die Ausgangskomponenten (a) bis (f) sind beispielsweise ausführlich in den Schriften DE-A 195 48 770 und DE-A 195 48 771 dargestellt und dem Fachmann zudem allgemein bekannt.

Das erfindungsgemäße Verfahren erfolgt bevorzugt kontinuierlich, besonders bevorzugt vollständig automatisiert, in einer Taktstraße, die mindestens 4, bevorzugt 30 bis 300, besonders bevorzugt 50 bis 200 Werkzeuge umfasst. In dieser Taktstraße werden die einzelnen Werkzeuge üblicherweise an den folgenden Stationen bearbeitet:
- Formenbefüllstation, gegebenenfalls mit mehreren Mischköpfen
- Formenschließstation, in der die befüllten Formen oder Formennester zur Erzielung einer gleichmäßigen Aushärtens der produzierten Formteile üblicherweise mit einem Abdeckelement versehen werden,
- Aushärtebereichzuführung für gegebenenfalls mehrere nebeneinander angeordnete
- Aushärtebereiche, die üblicherweise wie bevorzugt auch die Formen selbst beheizbar sind,
- Formenöffnungsstation, in der die Formen bzw. Deckel geöffnet werden,
- Entformstation, in welcher die ausgehärteten Formteilrohlinge auf dem Kern (v) aus der jeweiligen Form genommen werden und wo bevorzugt gleichzeitig der Formkörper vom Kern (vi) gestreift wird, besonders bevorzugt mit direkt anschließendem Austausch der Kerne, wobei der Kern (vi) nach dem Abstreifen des Formkörpers in der Form platziert wird und der Kern (v) mit dem neuen Formkörper in die Position zum Abstreifen des Formkörpers rückt,
- gegebenenfalls Qualitätskontroll- und/oder Nachbearbeitungsstation für den oder die Formkörper auf dem oder den aus der Form entfernten Kern(en) (v),
- Reinigungstrecke, in der die Formenwerkzeuge gereinigt, gegebenenfalls von Werkstoffrückständen befreit und dann mit einem Trennmittel versehen werden, bevor sie wieder zur
- Befüllstation 4 gefördert werden, wo die Form oder die Formen (iv) erneut befüllt werden.

Besonders bevorzugt wird der Formkörper 1 min bis 60 min nach dem Öffnen der Form (iv) und somit der Herausnahme aus der Form (iv) vom Kern (v) entfernt.

Die Fixierung der hergestellten Formkörper auf dem Kern (v) außerhalb der Form, d.h. mit der frei zugänglichen äußeren Oberfläche der Formkörper, bietet zudem den wesentlichen Vorteil, dass eine automatisierte Qualitätskontrolle durchgeführt werden kann, ohne dass die Periode bis zur nächsten Befüllung der Form verlängert werden muss. Die Qualitätskontrolle kann beispielsweise durch allgemein bekannte optische Methoden erfolgen. Bevorzugt wird somit der Formkörper außerhalb der Form (iv) vor dem Entfernen vom Kern (v) einem Soll-Ist-Vergleich unterzogen. Bevorzugt wird mit der Qualitätskontrolle eine Sortierung der hergestellten Formkörper, d.h. Aussortierung fehlerhafter Produkte, kombiniert. Ein weiterer Vorteil dieser Fixierung der Formkörper auf dem Kern außerhalb der Form ist die Möglichkeit, die Formkörper nachzubehandeln, beispielsweise indem man den Formkörper außerhalb der Form (iv) vor dem Entfernen vom Kern (v) bearbeitet, beispielsweise entgratet, graviert, poliert und/oder mit anderen Formteilen, beispielsweise Ringen, Kappen oder Einlegern, verbindet, beispielsweise durch einclipsen, überstreifen und/oder ein- und/oder verklemmen.

Bevorzugt ist somit auch ein Werkzeugträger zur Herstellung von hohlen Formteilen enthaltend mindestens eine Form (iv) und mindestens zwei Kerne (v) und (vi), die den Hohlraum der Formteile bestimmen, wobei die Kerne (v) und (vi) abwechselnd in der Form (iv) positioniert werden können. Dabei sind die bevorzugt zylindrischen Kerne (v) und (vi) bevorzugt parallel ausgerichtet und parallel zur Längsachse der Kerne beweglich angeordnet, d.h. die Kerne können nach oben und/oder unten aus der Form (iv) bewegt werden. Besonders bevorzugt sind die Kerne (v) und (vi) drehbar montiert, wobei die gemeinsame Drehachse parallel zur Längsachse der Kerne und mittig zwischen den Kernen (v) und (vi) liegt. Beispielsweise können die Kerne (v) und (vi) auf einem gemeinsamen Drehteller oder einem drehbaren Balken oder Stange montiert sein, wobei der Abstand des Kerns (v) und der Abstand des Kerns (vi) jeweils von der Drehachse gleich sind. Bevorzugt ist ein Werkzeugträger, der eine Form (iv) umfassend bevorzugt zwei Seitenteile, die zumindest die Mantelfläche des herzustellenden Formkörpers definieren, mindestens ein, bevorzugt ein Deckelteil sowie ein Bodenteil, das mittig einen in die Form ragenden Kern (v) aufweist, der den Hohlraum des herzustellenden Formkörpers definiert und nach unten aus der Form (iv) beweglich angeordnet und mit einem weiteren Kern (vi) drehbar um eine Drehachse, die parallel zur Längsachse der Kerne (v) und (vi) sowie des zylindrischen Formkörpers verbunden ist, sowie bevorzugt eine Vorrichtung zum Abstreifen des Formkörpers vom Kern (v) enthält.

Bevorzugt enthält der Werkzeugträger eine Vorrichtung, bevorzugt eine Klappe, mit der die Formkörper vom Kern (v) abgestreift werden. Wie bereits dargestellt ist der Werkzeugträger bevorzugt beweglich in einer bevorzugt umlaufenden und kontinuierlich betriebenen Taktstraße mit relativ zum Werkzeugträger örtlich fixiertem Mischkopf zur Einfüllung der Ausgangskomponenten zur Herstellung der Formkörper in die Form (iv) angeordnet.

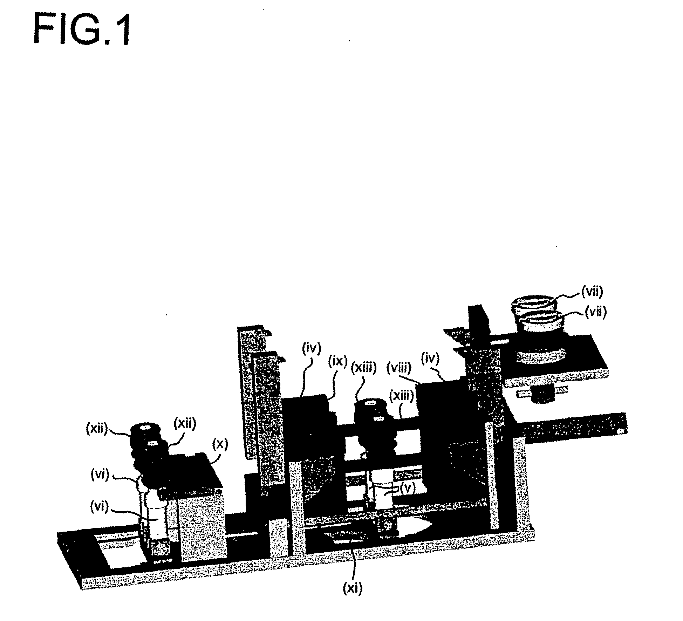

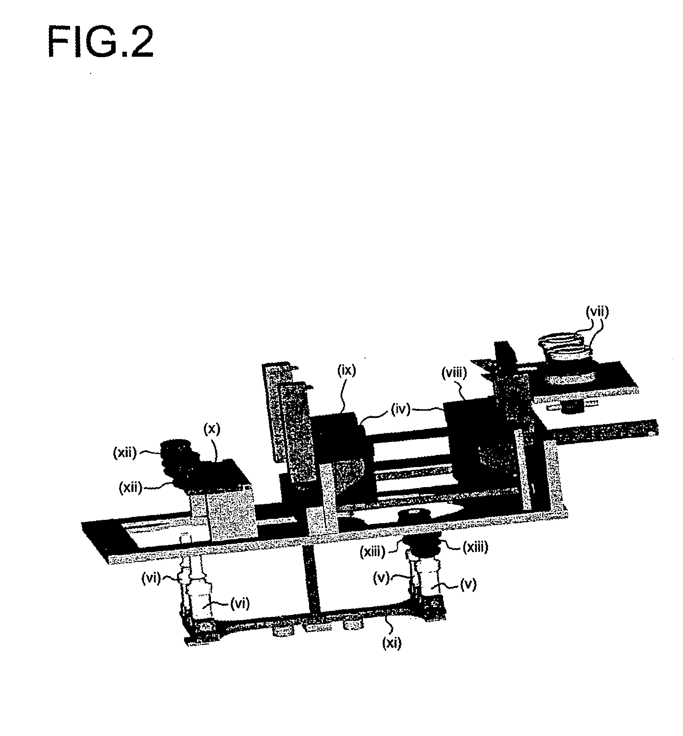

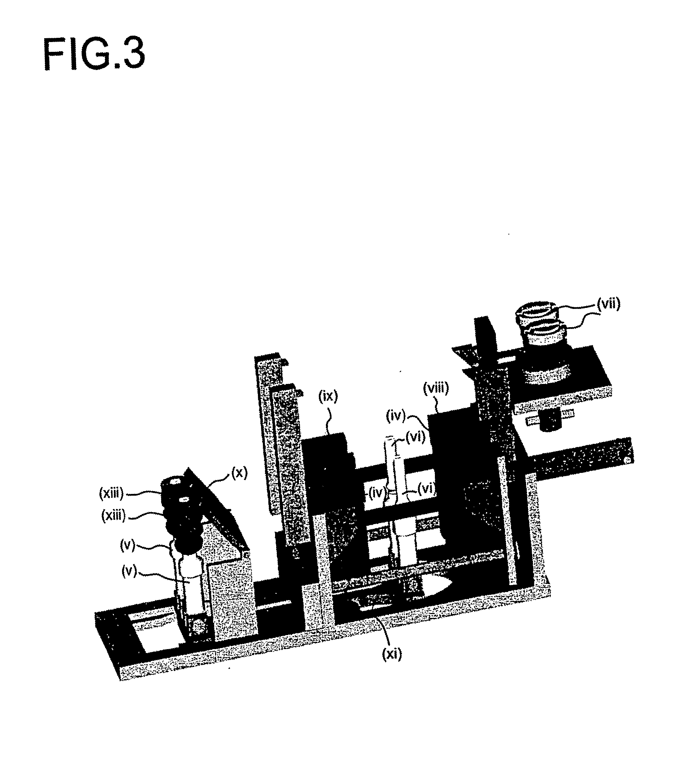

Ein beispielhaftes Werkzeug ist in verschiedenen Arbeitsstufen in den Figuren 1 bis 4 dargestellt. In den Figuren ist ein Werkzeugträger mit zwei Formen (iv) und jeweils zwei Kernen (v) und (vi) in vier Stufen des Verfahrens dargestellt. Die Deckel der Formen (iv) sind mit (vii) gekennzeichnet, die zwei Seitenteile einer Form (iv) mit (viii) bzw. (ix). Die Klappe zum Abstreifen eines Formteils vom Kern ist mit (x) bezeichnet. Der Drehteller oder Drehbalken ist mit (xi) gekennzeichnet.

In der Figur 1 ist die Form geöffnet, d.h. der Deckel aufgeklappt und die Seitenteile vom Formteil weggeschoben. Die im vorherigen Arbeitsgang in der Form (iv) hergestellten und auf den Kernen (vi) befindlichen Formteile (xii) befinden sich über dem Abstreifer (x), die neuen Formteile (xiii) auf den Kernen (v) sind noch in der Form (iv).

Figur 2 stellt die Situation dar, nachdem der Drehbalken (xi) mit den Kernen (v) und (vi) sowie den Formteilen (xiii) aus der Form abgesenkt wurde. Die Klappe (x) hat die Formteile (xii) von den Kernen (vi) gestreift.

In Figur 3 befinden sich nach der Drehung des Balkens (xi) um 180° sowie Anheben der Kerne (v) und (vi) und des Balkens (xi) die Kerne (vi) in der Form (iv) und die Kerne (v) mit den neuen Formteilen (xiii) "oberhalb" der Klappe (x).

In Figur 4 wurde die Form (iv) geschlossen, indem die Seitenteile (viii) und (ix) zugeschoben und die Deckel (vii) zuklappt wurden. Durch das Verschieben der Seitenteile (viii) wurde auch die Klappe (x) von den Kernen (v) und den neuen Formteilen (xiii) weg bewegt. Dadurch klappte die Klappe (x) herunter und wird beim Öffnen der Form (iv) entsprechend wieder unter die Formteile (xiii) geschoben (siehe Figur 1).

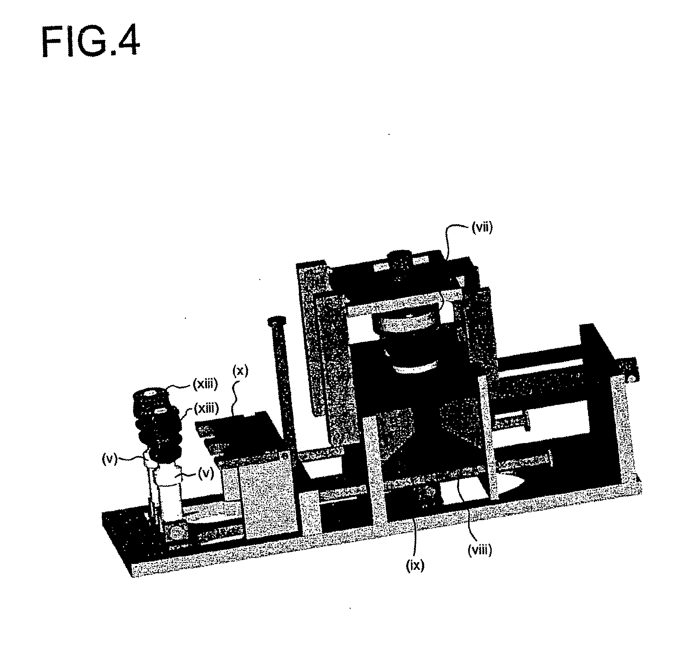

Der nach Figur 4 folgende Arbeitsschritt ist der Figur 1 zu entnehmen, d.h. die in den Figuren 1 bis 4 dargestellten Positionen bzw. Arbeitsschritte würden bevorzugt kontinuierlich betrieben.

## Patentansprüche

1. Verfahren zur Herstellung von hohlen Formkörpern in einem Werkzeugträger umfassend die Schritte
(i) Einfüllen der Ausgangskomponenten zur Herstellung der Formkörper in eine Form (iv), die einen Kern (v) aufweist, der den Hohlraum des Formkörpers definiert,
(ii) Öffnen der Form (iv), wobei der Formkörper durch den Kern (v) festgehalten wird,
(iii) Entfernen des Formkörpers vom Kern (v),
wobei man den Formkörper außerhalb der Form (iv) vom Kern (v) entfernt, **dadurch gekennzeichnet, dass** man die Ausgangskomponenten zur Herstellung der Formkörper in eine mit Trennmittel versehene Form (iv) füllt, die einen am Boden oder am Deckel befestigten Kern (v) aufweist, der den Hohlraum des Formkörpers definiert und der mit mindestens einem weiteren Kern (vi) verbunden ist, der sich außerhalb der Form (iv) befindet, die Form (iv) verschließt, nach dem Öffnen der Form (iv) den Kern (v) nach oben oder unten aus der durch die äußeren Wände definierten Form (iv) bewegt, durch eine Drehbewegung um 180° den Kern (v) gegen den Kern (vi), der keinen Formkörper festhält, austauscht, den Kern (vi) in die Form (iv) bewegt wobei der Kern (v) in eine Position gerät, aus der die Formkörper bei dem Entfernen des Kerns (vi) aus der Form (iv) von dem mit dem Kern (vi) verbundenen Kern (v) abgestreift werden.

2. Verfahren gemäß Anspruch 1, **dadurch gekennzeichnet, dass** man die Formkörper in einer Taktstraße umfassend mindestens 4 Werkzeugträger herstellt.

3. Verfahren gemäß Anspruch 1, **dadurch gekennzeichnet, dass** der Werkzeugträger mindestens zwei Kerne (v) und (vi) aufweist, die abwechselnd in die Form (iv) eingebracht werden.

4. Verfahren gemäß Anspruch 1, **dadurch gekennzeichnet, dass** die Formkörper auf thermoplastischen Kunststoffen, Gummi, und/oder Kunststoffen hergestellt aus reaktiven Ausgangskomponenten in der Form (iv) basieren.

5. Verfahren gemäß Anspruch 1, **dadurch gekennzeichnet, dass** es sich bei den Ausgangskomponenten zur Herstellung der Formkörper um eine Reaktionsmischung enthaltend (a) Isocyanate und (b) gegenüber Isocyanaten reaktive Verbindungen handelt, mit der zellige Polyurethanelastomere als Formköper hergestellt werden.

6. Verfahren gemäß Anspruch 1, **dadurch gekennzeichnet, dass** der Formkörper 1 min bis 60 min nach dem Öffnen der Form (iv) vom Kern (v) entfernt wird.

7. Verfahren gemäß Anspruch 1, **dadurch gekennzeichnet, dass** der Formkörper außerhalb der Form (iv) vor dem Entfernen vom Kern (v) einem Soll-Ist-Vergleich unterzogen wird.

8. Verfahren gemäß Anspruch 1, **dadurch gekennzeichnet, dass** der Formkörper außerhalb der Form (iv) vor dem Entfernen vom Kern (v) bearbeitet wird.

## Claims

1. A method of producing hollow moldings in a tool carrier, comprising the steps of
(i) filling the starting components for producing the moldings into a mold (iv), which has a core (v) which defines the hollow space of the molding,
(ii) opening the mold (iv), the molding being securely held by the core (v),
(iii) removing the molding from the core (v),
the molding being removed from the core (v) outside the mold (iv), wherein the starting components for producing the moldings are filled into a mold (iv) which is provided with release agents and which has a core (v) which is attached to the base or to the cover, defines the hollow space of the molding and is connected to at least one further core (vi), which is located outside the mold (iv), the mold (iv) is closed, after opening of the mold (iv) the core (v) is moved upward or downward out of the mold (iv) defined by the outer walls, the core (v) is exchanged for the core (vi), which is not holding a molding, by a pivoting movement through 180°, and the core (vi) is moved into the mold (iv), with the core (v) arriving in a position from which the moldings are stripped off the core (v), connected to the core (vi), when the core (vi) is removed from the mold (iv).

2. The method according to claim 1, wherein the moldings are produced in a fixed-cycle line comprising at least 4 tool carriers.

3. The method according to claim 1, wherein the tool carrier has at least two cores (v) and (vi), which are alternately introduced into the mold (iv).

4. The method according to claim 1, wherein the moldings are based on thermoplastic materials, rubber and/or plastics produced from reactive starting components in the mold (iv).

5. The method according to claim 1, wherein the starting components for producing the moldings comprise a reaction mixture comprising (a) isocyanates and (b) compounds reactive to isocyanates, with which mixture cellular polyurethane elastomers are produced as moldings.

6. The method according to claim 1, wherein the molding is removed from the core (v) 1 min to 60 min after the opening of the mold (iv).

7. The method according to claim 1, wherein the molding is subjected to a setpoint/actual comparison outside the mold (iv) before removal from the core (v).

8. The method according to claim 1, wherein the molding is processed outside the mold (iv) before removal from the core (v).

## Revendications

1. Procédé de fabrication de corps moulés creux dans un porte-outil, comportant les étapes consistant à :
(i) charger les composants initiaux pour la fabrication de corps moulés dans un moule (iv), présentant un noyau (v) qui définit l'espace creux du corps moulé,
(ii)ouvrir le moule (iv), le corps moulé étant maintenu par le noyau (v),
(iii) écarter le corps moulé du noyau (v),
le corps moulé étant écarté du noyau (v) hors du moule (iv), **caractérisé en ce que** les composants initiaux pour la fabrication de corps moulés sont chargés dans un moule (iv) garni d'agents de démoulage, qui présente un noyau (v) fixé sur le fond ou sur le couvercle, qui définit l'espace creux du corps moulé et est relié avec au moins un autre noyau (vi) qui se trouve à l'extérieur du moule (iv), **en ce que** le moule (iv) est fermé, le noyau (v) est déplacé, après ouverture du moule (iv) vers le haut ou vers le bas hors du moule (iv), défini par les parois extérieures, le noyau (v) est échangé contre le noyau (vi), qui ne maintient aucun corps moulé, par un mouvement de rotation de 180°, et le noyau (vi) est déplacé dans le moule (iv), le noyau (v) parvenant dans une position à partir de laquelle les corps moulés sont décollés du noyau (v) relié au noyau (vi) lors de l'écartement du noyau (vi) hors du moule (iv).

2. Procédé selon la revendication 1, **caractérisé en ce que** les corps moulés sont fabriqués sur une chaîne de production comportant au moins 4 porte-outils.

3. Procédé selon la revendication 1, **caractérisé en ce que** le porte-outil présente au moins deux noyaux (v) et (vi) qui sont mis en place tour à tour dans le moule (iv).

4. Procédé selon la revendication 1, **caractérisé en ce que** les corps moulés sont à base de matières synthétiques thermoplastiques, de caoutchouc, et/ou de matières synthétiques préparées à partir de composants initiaux réactifs dans le moule (iv).

5. Procédé selon la revendication 1, **caractérisé en ce qu'**il s'agit, à propos des composants initiaux pour la préparation des corps moulés, d'un mélange réactionnel contenant (a) des isocyanates et (b) des composés réactifs vis-à-vis des isocyanates, avec lesquels des élastomères cellulaires de polyuréthanne sont fabriqués en tant que corps moulés.

6. Procédé selon la revendication 1, **caractérisé en ce que** le corps moulé est écarté du noyau (v) 1 minute à 60 minutes après l'ouverture du moule (iv).

7. Procédé selon la revendication 1, **caractérisé en ce que** le corps moulé est soumis à une comparaison (valeur de consigne valeur effective) hors du moule (iv) avant d'être écarté du noyau (v).

8. Procédé selon la revendication 1, **caractérisé en ce que** le corps moulé est usiné à l'extérieur du moule (iv) avant d'être écarté du noyau (v).
